# EUROPEAN PATENT APPLICATION

(11) **EP 4 376 311 A1**
(43) Date of publication of application: **29.05.2024**
(21) Application number: 22846270.1
(22) Date of filing: 21.07.2022
(51) Int. Cl.: H04B 1/525, H04B 1/04, H04B 1/18, H04B 7/0413

(54) **HETEROGENEOUS COMPLEX WIRELESS COMMUNICATION DEVICE**

(30) Priority: 21.07.2021 KR 20210095804
(71) Applicant: LG INNOTEK CO., LTD., Seoul 07796 (KR)
(72) Inventor: KIM, Yu Seon, Seoul 07796 (KR); BAE, Seok, Seoul 07796 (KR); PARK, Il Hee, Seoul 07796 (KR); JEONG, Youn Ung, Seoul 07796 (KR); CHOI, Seok Dong, Seoul 07796 (KR)
(74) Representative: M. Zardi & Co S.A.
(86) International application number: PCT/KR2022/010719
(87) International publication number: WO 2023/003400

(57) **Abstract**

The present invention relates to a heterogeneous complex wireless communication device capable of mitigating interference between heterogeneous wireless communication protocols having similar frequency bands in supporting the heterogeneous wireless communication protocols together. A wireless communication module according to an embodiment of the present invention may comprise: a signal processing device; a (1-1)-th antenna which is connected to the signal processing device and transmits or receives a (1-1)-th signal; a (1-2)-th antenna which is connected to the signal processing device and transmits or receives a (1-2)-th signal; a second antenna which is connected to the signal processing device and transmits or receives a second signal; a first phase control element disposed between the (1-1)-th antenna and the signal processing device; a (1-2)-th phase control element disposed between the (1-2)-th antenna and the signal processing device; and a second phase control element disposed between the second antenna and the signal processing device, wherein the (1-1)-th signal output from the (1-1)-th phase control element and the (1-2)-th signal output from the (1-2)-th phase control element have a phase difference of 180 degrees from each other, and the second signal output from the second phase control element has a phase difference of 90 degrees from each of the (1-1)-th signal and the (1-2)-th signal.

## Description

### [Technical Field]

The present disclosure relates to a heterogeneous complex wireless communication device capable of mitigating interference between heterogeneous wireless communication protocols having similar frequency bands in simultaneously supporting the heterogeneous wireless communication protocols.

### [Background Art]

In recent years, a wireless communication module simultaneously supporting various wireless communication protocols, such as Wi-Fi and Bluetooth (BT), is mounted not only in laptop computers but also in display devices such as large TVs in order to conveniently achieve wireless communication with external devices providing source content, such as mobile devices.

However, when an antenna corresponding to the Wi-Fi protocol and an antenna corresponding to the Bluetooth protocol are provided in a single wireless communication module and operate simultaneously, interference occurs therebetween. For example, a signal of one side acts as noise in the other side in a specific band in which operating frequencies overlap each other, for example, the 2.4 GHz band.

When signal interference occurs between these heterogeneous wireless protocols, there is a problem in that a data transmission speed decreases and coverage decreases. In particular, many recent wireless communication modules are equipped with a dipole antenna, i.e., two or more antennas, for at least one protocol in order to enhance communication performance, and in this case, signal interference is more problematic.

### [Disclosure]

### [Technical Problem]

The present disclosure has been made in order to solve the above problems with the related art, and provides a heterogeneous complex wireless communication device capable of effectively reducing signal interference between heterogeneous protocols, the operating frequencies of which overlap each other.

The objects of the present disclosure are not limited to the above-mentioned objects, and other objects not mentioned herein will be clearly understood by those skilled in the art from the following description.

### [Technical Solution]

A wireless communication module according to an embodiment of the present disclosure may include a signal processing device, a 1-1^{st} antenna connected to the signal processing device to transmit and receive a 1-1^{st} signal, a 1-2^{nd} antenna connected to the signal processing device to transmit and receive a 1-2^{nd} signal, a second antenna connected to the signal processing device to transmit and receive a second signal, a first phase control element disposed between the 1-1^{st} antenna and the signal processing device, a 1-2^{nd} phase control element disposed between the 1-2^{nd} antenna and the signal processing device, and a second phase control element disposed between the second antenna and the signal processing device, wherein the 1-1^{st} signal output from the 1-1^{st} phase control element and the 1-2^{nd} signal output from the 1-2^{nd} phase control element may have a phase difference of 180 degrees, and the second signal output from the second phase control element may have a phase difference of 90 degrees from each of the 1-1^{st} signal and the 1-2^{nd} signal.

In an example, the 1-1^{st} signal and the 1-2^{nd} signal may be signals according to a first protocol, and the second signal may be a signal according to a second protocol different from the first protocol.

In an example, the first protocol and the second protocol may have operating frequencies at least partially overlapping each other, and the phase difference of 180 degrees and the phase difference of 90 degrees may be phase differences at the operating frequencies overlapping each other.

In an example, the first protocol may include a Wi-Fi protocol, and the second protocol may include a Bluetooth protocol.

In addition, a wireless communication module according to another embodiment of the present disclosure may include a signal processing device, a 1-1^{st} antenna connected to the signal processing device to transmit and receive a 1-1^{st} signal, a 1-2^{nd} antenna connected to the signal processing device to transmit and receive a 1-2^{nd} signal, a second antenna connected to the signal processing device to transmit and receive a second signal, a first phase control element disposed between the 1-1^{st} antenna and the signal processing device or between the 1-2^{nd} antenna and the signal processing device, a second phase control element disposed between the second antenna and the signal processing device, and a third phase control element disposed between a first ground connected to the 1-1^{st} antenna and to the 1-2^{nd} antenna and a second ground connected to the second antenna, wherein the 1-1^{st} signal output from the 1-1^{st} antenna and the 1-2^{nd} signal output from the 1-2^{nd} antenna may have a phase difference of 175 degrees to 185 degrees, and the second signal output from the second antenna may have a phase difference of 85 degrees to 95 degrees from each of the 1-1^{st} signal and the 1-2^{nd} signal.

In an example, the 1-1^{st} signal and the 1-2^{nd} signal may be signals according to a first protocol, and the second signal may be a signal according to a second protocol different from the first protocol.

In an example, the first protocol and the second protocol may have operating frequencies at least partially overlapping each other, and the phase differences may be phase differences at the operating frequencies overlapping each other.

In an example, the first protocol may include a Wi-Fi protocol, and the second protocol may include a Bluetooth protocol.

In an example, the third phase control element may generate a phase difference of 85 degrees to 95 degrees between both ends thereof.

In an example, the 1-1^{st} antenna and the 1-2^{nd} antenna may constitute a multi-input multi-output (MIMO) antenna according to the first protocol.

### [Advantageous Effects]

A heterogeneous complex wireless communication device according to the present disclosure has the following effects.

First, it may be possible to effectively reduce signal interference between heterogeneous protocols by generating a specific phase difference between antennas in a band in which operating frequencies of the heterogeneous protocols overlap each other.

Second, the transmission speed and coverage of the wireless communication device may be increased due to reduction in signal interference.

The effects achievable through the present disclosure are not limited to the above-mentioned effects, and other effects not mentioned herein will be clearly understood by those skilled in the art from the following description.

### [Description of Drawings]

The accompanying drawings are included to provide a further understanding of the disclosure and illustrate embodiments of the disclosure together with the detailed description. However, the technical features of the disclosure are not limited to specific drawings, and the features shown in the drawings may be combined to construct a new embodiment.
FIG. 1 illustrates an example of the configuration of a wireless communication module supporting general heterogeneous protocols.
FIG. 2 is a graph for explaining a phase difference principle for reducing signal interference between heterogeneous protocols applied to embodiments.
FIG. 3 illustrates an example of the configuration of a heterogeneous complex wireless communication module according to an embodiment.
FIG. 4 illustrates an example of the configuration of a heterogeneous complex wireless communication module according to another embodiment.
FIG. 5 illustrates an example of the configuration of a heterogeneous complex wireless communication module according to still another embodiment.
FIG. 6 is a diagram for explaining the phase difference between signals of the heterogeneous complex wireless communication module shown in FIG. 4.
FIG. 7 is a diagram for explaining the phase difference between signals of the heterogeneous complex wireless communication module shown in FIG. 5.
FIGs. 8A to 8C illustrate voltage standing wave ratios for each signal of the heterogeneous complex wireless communication module shown in FIG. 4.
FIGs. 9A to 9C illustrate isolation between signals of the heterogeneous complex wireless communication module shown in FIG. 4.

### [Best Mode]

Hereinafter, devices and various methods to which embodiments of the present disclosure are applied will be described in detail with reference to the accompanying drawings. The suffixes "module" and "unit" used herein to describe configuration components are assigned or used in consideration only of convenience in creating this specification, and the two suffixes themselves do not have any distinguished meanings or roles from each other.

In the following description of the embodiments, it will be understood that, when each element is referred to as being formed "on" or "under" and "ahead of" or "behind" another element, it can be directly "on" or "under" and "ahead of" or "behind" the other element, or can be indirectly formed with one or more intervening elements therebetween.

Additionally, terms such as "first", "second", "A", "B", "(a)", "(b)", etc. may be used herein to describe the components of the embodiments. These terms are only used to distinguish one element from another element, and the essence, order, or sequence of corresponding elements is not limited by these terms. It should be noted that if it is described in the specification that one component is "connected", "coupled", or "joined" to another component, the former may be directly "connected", "coupled", or "joined" to the latter, or may be indirectly "connected", "coupled", or "joined" to the latter via another component.

Additionally, the term "comprises", "includes", or "has" described herein should be interpreted not to exclude other elements but to further include such other elements since the corresponding elements may be inherent unless mentioned otherwise. Unless otherwise defined, all terms used herein, which include technical or scientific terms, have the same meanings as those generally appreciated by those skilled in the art. Terms such as those defined in common dictionaries should be interpreted as having the same meanings as terms in the context of the pertinent technology, and should not be interpreted as having ideal or excessively formal meanings unless clearly defined in the specification.

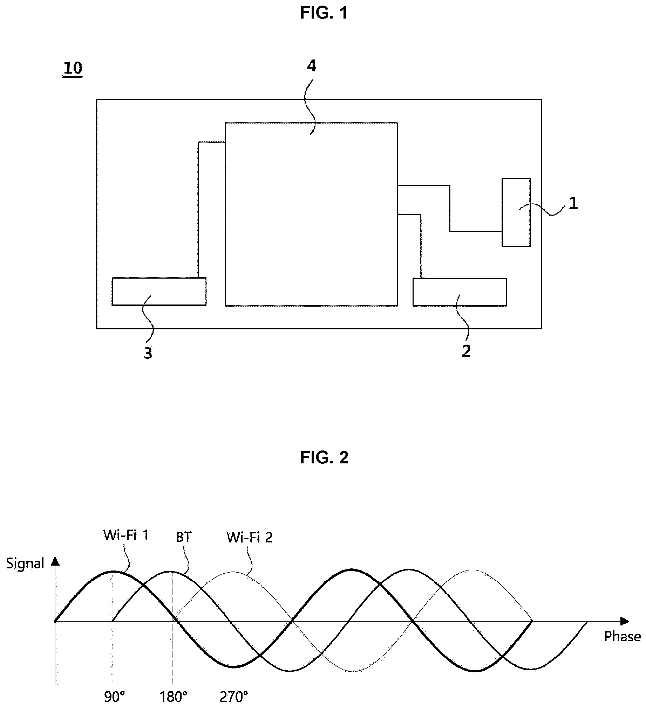

FIG. 1 illustrates an example of the configuration of a wireless communication module supporting general heterogeneous protocols.

Referring to FIG. 1, the wireless communication module 10 may include three antennas 1, 2, and 3 and one signal processing device 4. The signal processing device 4 may transmit and receive wireless signals according to two or more different wireless communication protocols, i.e., heterogeneous protocols. For example, the heterogeneous protocols may include Bluetooth (BT) and Wi-Fi, and the wireless communication module 10 may be configured such that two antennas 1 and 2 transmit and receive Wi-Fi signals and the remaining antenna 3 transmits and receives Bluetooth signals.

In general, Bluetooth has an operating frequency band of 2.4 GHz, Wi-Fi has operating frequency bands of 2.4 GHz and 5 GHz, and the Wi-Fi 6E standard supports a band of 6 GHz. Since Bluetooth and Wi-Fi have operating frequencies overlapping each other in the 2.4 GHz band, when the wireless communication module 10 performs communication through the two protocols at the same time, interference may occur between the two protocols in the 2.4 GHz band.

In a general wireless communication module 10, in order to cope with signal interference between heterogeneous protocols in a specific band, a channel having relatively small interference (i.e., having excellent signal quality) within the operating frequency is found and used, or a time division method of varying a signal transmission/reception section or period according to each protocol is used. However, a phase difference based on the respective antennas 1, 2, and 3 has not been considered as a design factor for coping with interference.

Embodiments of the present disclosure propose to mitigate signal interference by generating a preset phase difference between antennas in a heterogeneous complex wireless communication module.

For example, if there are two antennas for transmitting and receiving signals according to a first protocol and there is one antenna for transmitting and receiving signals according to a second protocol different from the first protocol, interference between the protocols may be effectively mitigated by generating a phase difference of about 180 degrees between the antennas transmitting and receiving signals according to the first protocol and generating a phase difference of about 90 degrees between the antenna transmitting and receiving signals according to the second protocol and each of the two other antennas. This will be described with reference to FIG. 2.

FIG. 2 is a graph for explaining a phase difference principle for reducing signal interference between heterogeneous protocols applied to the embodiments.

In FIG 2, it is assumed that Wi-Fi signals are transmitted and received in a multi-antenna manner (e.g., multi-input multi-output (MIMO) manner) using two antennas (1-1^{st} antenna and 1-2^{nd} antenna) and Bluetooth signals are transmitted and received using a single antenna (second antenna).

Referring to FIG. 2, in order to reduce interference between the heterogeneous protocols, when a first Wi-Fi signal Wi-Fi 1 has a phase of 90 degrees at the 1-1^{st} antenna in the 2.4 GHz band, a second Wi-Fi signal Wi-Fi 2 may have a phase of 270 degrees at the 1-2^{nd} antenna. In addition, a Bluetooth signal BT may have a phase of 180 degrees at the second antenna at the corresponding time point. In this case, the two signals Wi-Fi 1 and Wi-Fi 2 corresponding to the same protocol have a phase difference of 180 degrees at the corresponding antennas, and signals corresponding to the heterogeneous protocols (i.e., Wi-Fi 1 ↔ BT and Wi-Fi 2 ↔ BT) have a phase difference of 90 degrees.

Due to this configuration, signals according to the same protocol operate in a dipole antenna structure, whereby transmission efficiency may increase, and signals according to the heterogeneous protocols are orthogonal to each other, whereby interference therebetween in a band in which operating frequencies overlap each other may be minimized. However, it should be noted that the phase difference described above is a theoretically ideal value, and in practice, an interference mitigation effect may be sufficiently accomplished with an error of about ±5 degrees. In other words, in the embodiments to be described below, the two signals Wi-Fi 1 and Wi-Fi 2 corresponding to the same protocol have a phase difference of 175 to 185 degrees at the corresponding antennas in a frequency band in which the operating frequencies overlap each other, and the signals corresponding to the heterogeneous protocols (i.e., Wi-Fi 1 ↔ BT and Wi-Fi 2 ↔ BT) have a phase difference of 85 to 95 degrees.

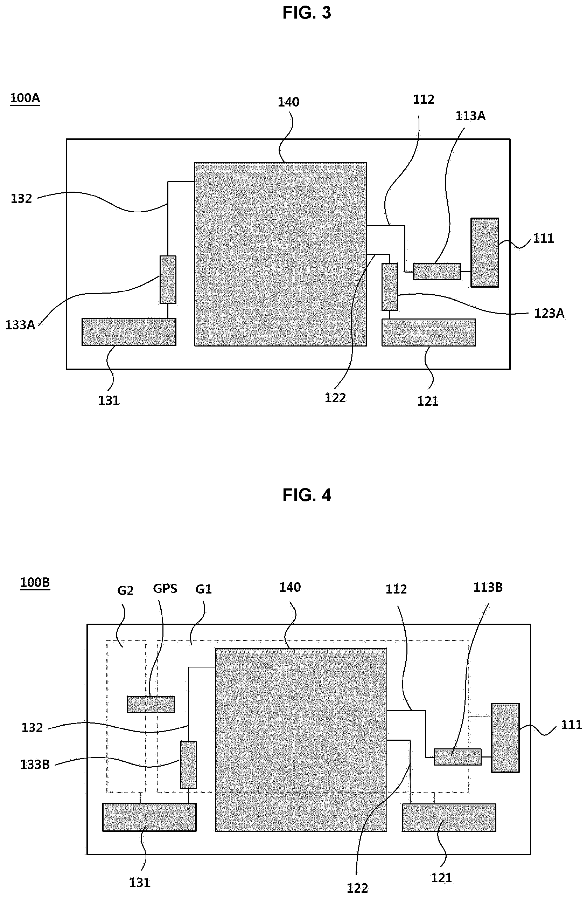

The configuration of the wireless communication module having the above-described phase difference between the antennas will be described below with reference to FIGs. 3 to 5.

FIG. 3 illustrates an example of the configuration of a heterogeneous complex wireless communication module according to an embodiment.

Referring to FIG. 3, a wireless communication module 100A according to an embodiment may include a 1-1^{st} antenna 111, a 1-2^{nd} antenna 121, a second antenna 131, and a signal processing device 140 configured to process signals transmitted and received through the above antennas.

In more detail, a 1-1^{st} signal according to the Wi-Fi protocol may be transmitted and received through the 1-1^{st} antenna 111, and the 1-1^{st} antenna 111 may be connected to the signal processing device 140 via a 1-1^{st} transmission line 112 and a 1-1^{st} phase control element 113A disposed on the 1-1^{st} transmission line 112.

In addition, a 1-2^{nd} signal according to the Wi-Fi protocol may be transmitted and received through the 1-2^{nd} antenna 121, and the 1-2^{nd} antenna 121 may be connected to the signal processing device 140 via a 1-2^{nd} transmission line 122 and a 1-2^{nd} phase control element 123A disposed on the 1-2^{nd} transmission line 122.

In addition, a second signal according to the Bluetooth protocol may be transmitted and received through the second antenna 131, and the second antenna 131 may be connected to the signal processing device 140 via a second transmission line 132 and a second phase control element 133A disposed on the second transmission line 132.

Each of the antennas 111, 121, and 131 is connected not only to a corresponding one of the transmission lines 112, 122, and 132, as described above, but also to a ground. However, for convenience of explanation, illustration of connection to the ground is omitted in FIG. 3.

Here, each of the phase control elements 113A, 123A, and 133A provides a predetermined phase change between the signal processing device 140 and a corresponding one of the antennas 111, 121, and 131 together with a corresponding one of the transmission lines 112, 122, and 132, thereby realizing the above-described signal phase difference between the antennas.

Here, each of the phase control elements 113A, 123A, and 133A may be implemented in a manner of stacking a plurality of conductive wires in a dielectric, a manner of alternately placing at least one capacitor and an inductor, or the like. However, the disclosure is not limited thereto, so long as it is possible to obtain a phase difference corresponding to a design target between both ends of the element through control of change in electrical length.

Based on the transmission signal, as described above, the 1-1^{st} signal output from the 1-1^{st} antenna 111 and the 1-2^{nd} signal output from the 1-2^{nd} antenna 121 have a phase difference of 180 degrees. In addition, the second signal output from the second antenna 131 has a phase difference of 90 degrees from each of the 1-1^{st} signal output from the 1-1^{st} antenna 111 and the 1-2^{nd} signal output from the 1-2^{nd} antenna 121.

Assuming that a transmission line having a uniform configuration and length is provided between each of the phase control elements 113A, 123A, and 133A and a corresponding one of the antennas 111, 121, and 131 or only a negligible phase difference (e.g., 1 degree or less) is generated therebetween, based on the transmission signal, the 1-1^{st} signal output from the 1-1^{st} phase control element 113A and the 1-2^{nd} signal output from the 1-2^{nd} phase control element 123A may have a phase difference of 180 degrees. In addition, the second signal output from the second phase control element 133A may have a phase difference of 90 degrees from each of the 1-1^{st} signal output from the 1-1^{st} phase control element 113A and the 1-2^{nd} signal output from the 1-2^{nd} phase control element 123A.

For example, assuming that the 1-1^{st} signal and the 1-2^{nd} signal output from the signal processing device 140 have the same phase, when a phase difference of 90 degrees occurs compared to when the 1-1^{st} signal is output from the signal processing device 140 via the 1-1^{st} transmission line 112 and the 1-1^{st} phase control element 113A, the 1-2^{nd} phase control element 123A and the 1-2^{nd} transmission line 122 need to be designed such that a phase difference of -90 degrees or 270 degrees occurs compared to when the 1-2^{nd} signal is output from the signal processing device 140 via the 1-2^{nd} transmission line 122 and the 1-2^{nd} phase control element 123A. Therefore, in practice, each of the 1-1^{st} phase control element 113A and the 1-2^{nd} phase control element 123A may be selected such that a phase changes by 180 degrees between both ends thereof, and an error after mounting of the wireless communication module 100A may be corrected through fine tuning of the phase difference while changing the length of the transmission line 112 or 122. However, the disclosure is not necessarily limited thereto. Similarly, it is preferable for the second phase control element 133A and the second transmission line 132 to be designed such that the second signal output from the second phase control element 133A has a phase of 0 degrees when the phase of the 1-2^{nd} signal output from the 1-2^{nd} phase control element 123A is -90 degrees and such that the second signal has a phase of 180 degrees when the phase of the 1-2^{nd} signal is 270 degrees.

In FIG. 3, the phase control element is disposed on each of the transmission lines in order to realize a phase difference between signals. Unlike this, according to another embodiment, at least some phase control elements on the transmission lines may be omitted, and a phase control element may also be used between grounds for signals, thereby further improving signal separation performance. This will be described with reference to FIG. 4.

FIG. 4 illustrates an example of the configuration of a heterogeneous complex wireless communication module according to another embodiment.

Similar to FIG. 3, referring to FIG. 4, a wireless communication module 100B according to another embodiment includes a 1-1^{st} antenna 111, a 1-2^{nd} antenna 121, a second antenna 131, and a signal processing device 140 configured to process signals transmitted and received through the respective antennas.

In more detail, a 1-1^{st} signal according to the Wi-Fi protocol may be transmitted and received through the 1-1^{st} antenna 111, and the 1-1^{st} antenna 111 may be connected to the signal processing device 140 via a 1-1^{st} transmission line 112 and a 1-1^{st} phase control element 113B disposed on the 1-1^{st} transmission line 112.

In addition, a 1-2^{nd} signal according to the Wi-Fi protocol may be transmitted and received through the 1-2^{nd} antenna 121, and the 1-2^{nd} antenna 121 may be connected to the signal processing device 140 via a 1-2^{nd} transmission line 122 without a phase conversion element.

In addition, a second signal according to the Bluetooth protocol may be transmitted and received through the second antenna 131, and the second antenna 131 may be connected to the signal processing device 140 via a second transmission line 132 and a second phase control element 133B disposed on the second transmission line 132.

Meanwhile, each of the antennas 111, 121, and 131 is connected not only to a corresponding one of the transmission lines 112, 122, and 132, as described above, but also to grounds. In detail, the 1-1^{st} antenna 111 and the 1-2^{nd} antenna 121 are connected to a first ground G1, and the second antenna 131 is connected to a second ground G2. Here, the first ground G1 and the second ground G2 may be conductively connected to each other via a ground phase control element GPS.

Here, assuming that the transmission lines 112, 122, and 132 have the same electrical length or only a negligible phase difference (e.g., 1 degree or less) is generated, it is preferable for the 1-1^{st} phase control element 113B to be implemented as an element having a phase difference of 180 degrees between both ends thereof, and it is preferable for the second phase control element 133B to be implemented as an element having a phase difference of 90 degrees between both ends thereof. However, the disclosure is not necessarily limited thereto.

For example, when the phase of the signal transmitted from the 1-1^{st} antenna 111 is -90 degrees, the phase of the signal of the transmitted from the 1-2^{nd} antenna may be 90 degrees, and the phase of the signal transmitted from the second antenna may be 0 degrees.

However, it is particularly preferable for the ground phase control element GPS to be implemented as an element generating a phase difference of 85 degrees to 95 degrees, preferably, a phase difference of 90 degrees, between both ends thereof. The reason for this is to generate a phase difference of about 90 degrees between the Wi-Fi signal and the Bluetooth signal in the ground, thereby blocking an offset signal or an interference signal. When each of the ground phase control element GPS and the second phase control element 133B has a phase difference of about 90 degrees between both ends thereof, the two phase control elements GPS and 133B may be implemented as the same element. However, the two phase control elements may be implemented as different elements.

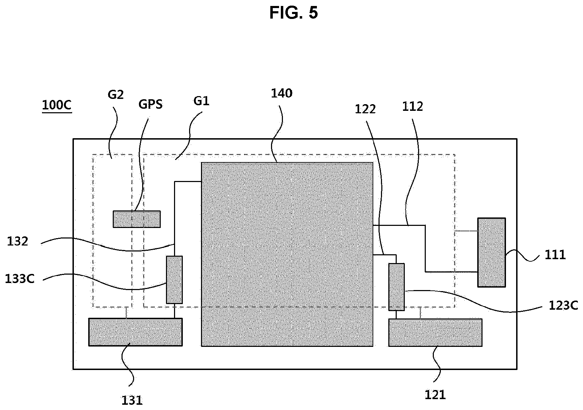

FIG. 5 illustrates an example of the configuration of a heterogeneous complex wireless communication module according to still another embodiment.

A wireless communication module 100C shown FIG. 5 has the same configuration as the wireless communication module 100B shown FIG. 4, except that the 1-1^{st} phase conversion element 113B is eliminated and a 1-2^{nd} phase conversion element 123C is applied. Therefore, the description of the same configuration will be omitted.

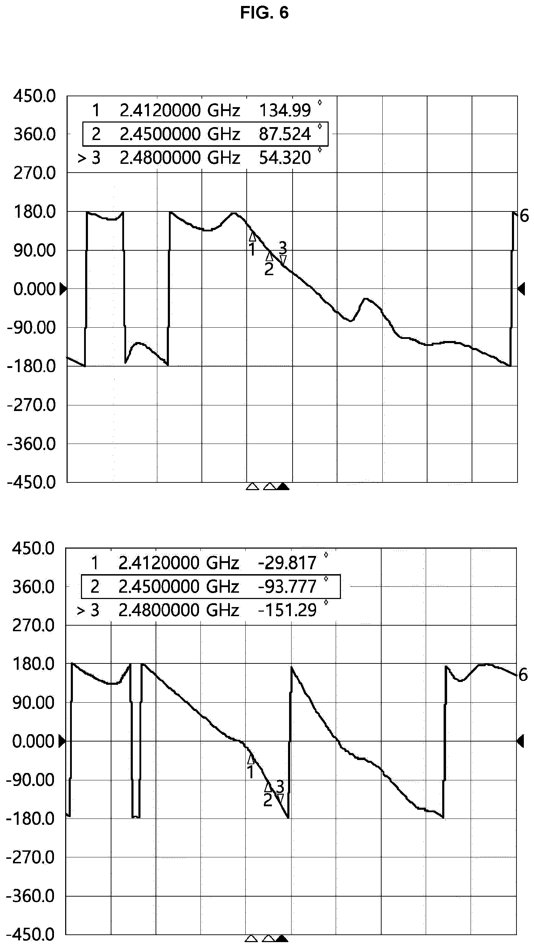

Hereinafter, the effects of the wireless communication modules according to the other embodiment and the still other embodiment will be described with reference to FIGs. 6 to 9C.

FIG. 6 is a diagram for explaining the phase difference between signals of the heterogeneous complex wireless communication module shown in FIG. 4.

In each of the upper graph and the lower graph in FIG. 6, the horizontal axis represents frequency, and the vertical axis represents phase.

First, the upper graph in FIG. 6 indicates the phase difference for each frequency band between the second signal and the 1-1^{st} signal. Measurement is performed at 2.41, 2.45, and 2.48 GHz in the 2.4 GHz band, and it can be seen that a phase difference of 87.5 degrees, which is close to 90 degrees that is a target phase difference, occurs in the 2.45 GHz band that corresponds to the center frequency.

Next, the lower graph in FIG. 6 indicates the phase difference for each frequency band between the second signal and the 1-2^{nd} signal. Measurement is performed at 2.41, 2.45, and 2.48 GHz in the 2.4 GHz band, and it can be seen that a phase difference of -93.8 degrees, which is close to -90 degrees that is a target phase difference, occurs in the 2.45 GHz band that corresponds to the center frequency.

In addition, it can be seen from a combination of the upper and lower graphs in FIG. 6 that the phase difference between the 1-1^{st} signal and the 1-2^{nd} signal is 181.3 degrees, which is close to 180 degrees that is a target phase difference.

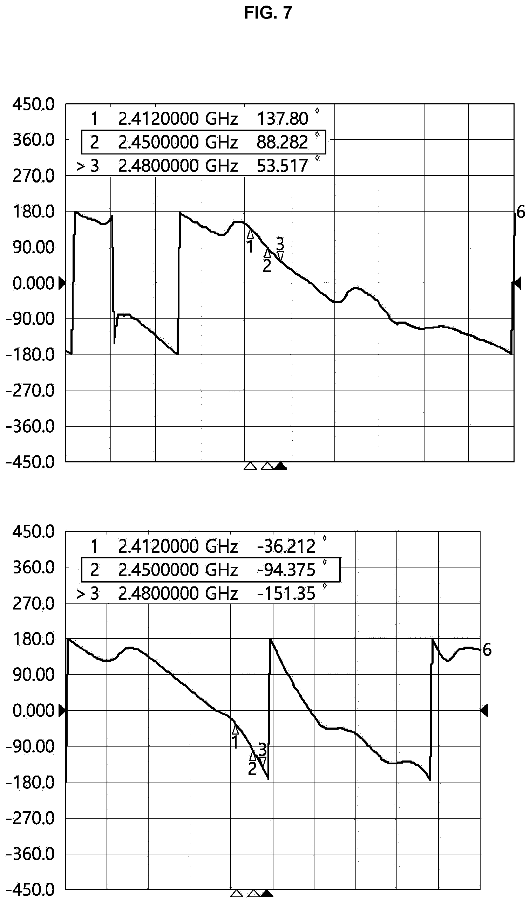

FIG. 7 is a diagram for explaining the phase difference between signals of the heterogeneous complex wireless communication module shown in FIG. 5.

First, the upper graph in FIG. 7 indicates the phase difference for each frequency band between the second signal and the 1-1^{st} signal. Measurement is performed at 2.41, 2.45, and 2.48 GHz in the 2.4 GHz band, and it can be seen that a phase difference of 88.3 degrees, which is close to 90 degrees that is a target phase difference, occurs in the 2.45 GHz band that corresponds to the center frequency.

Next, the lower graph in FIG. 7 indicates the phase difference for each frequency band between the second signal and the 1-2^{nd} signal. Measurement is performed at 2.41, 2.45, and 2.48 GHz in the 2.4 GHz band, and it can be seen that a phase difference of -94.4 degrees, which is close to -90 degrees that is a target phase difference, occurs in the 2.45 GHz band that corresponds to the center frequency.

In addition, it can be seen from a combination of the upper and lower graphs in FIG. 7 that the phase difference between the 1-1^{st} signal and the 1-2^{nd} signal is 182.7 degrees, which is close to 180 degrees that is a target phase difference.

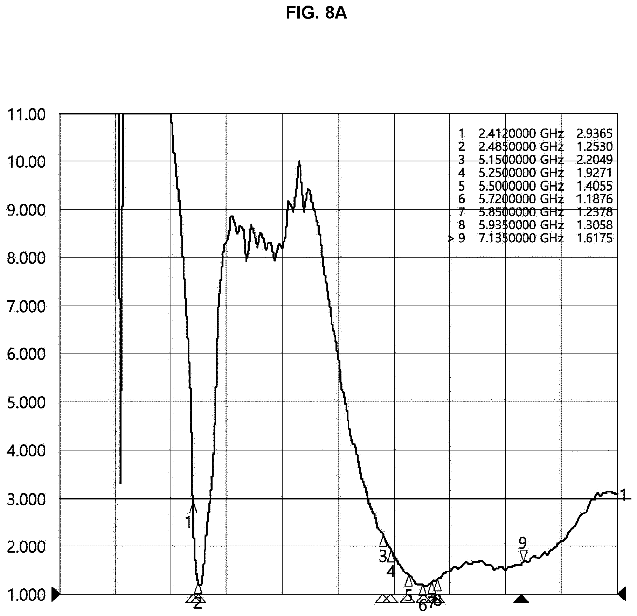

FIGs. 8A to 8C illustrate voltage standing wave ratios for each signal of the heterogeneous complex wireless communication module shown in FIG. 4.

The voltage standing wave ratio (VSWR) is ideally 1:1, that is, 1. In a heterogeneous complex environment, a desirable value of the VSWR may be 3 or less.

In each of the graphs in FIGs. 8A to 8C, the horizontal axis represents frequency, and the vertical axis represents VSWR. In addition,

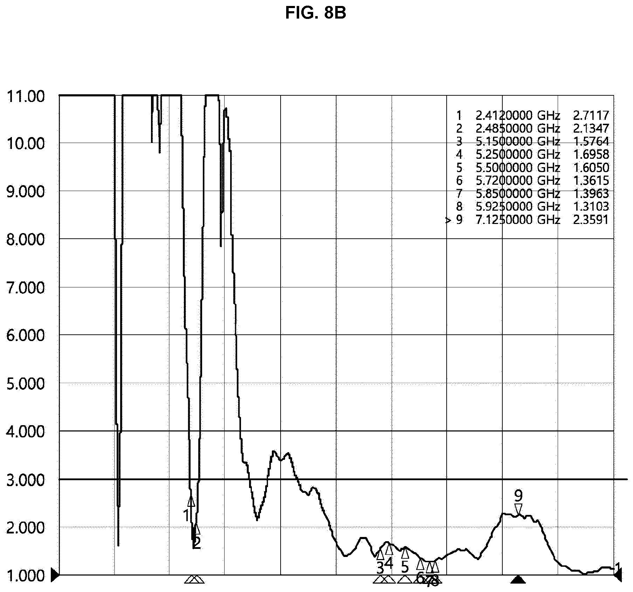

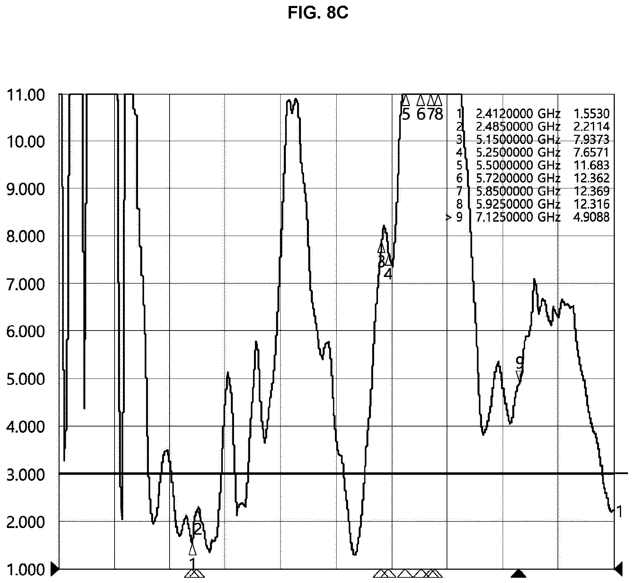

FIGs. 8A, 8B, and 8C indicate VSWRs for each frequency band of the 1-1^{st} signal, the 1-2^{nd} signal, and the second signal, respectively.

First, referring to FIG. 8A, it can be seen that the VSWR is maintained at 3 or less in the 2.4 GHz band, in which the usage band of the 1-1^{st} signal, which is a Wi-Fi signal, and the usage band of the second signal, which is a BT signal, overlap each other, and is close to 2 or maintained at 2 or less in the 5 GHz to 6 GHz band, in which the usage band of the 1-1^{st} signal and the usage band of the second signal do not overlap each other. That is, excellent antenna performance is ensured.

In addition, similar to FIG. 8A, it can be seen from FIG. 8B that the VSWR is maintained at 3 or less in the main usage band.

In addition, it can be seen from FIG. 8C that the VSWR is maintained at around 2 in the 2.4 GHz band, in which the usage band of the 1-1^{st} signal and the usage band of the 1-2^{nd} signal overlap each other. Although the VSWR exceeds 3 in the 5 GHz to 6 GHz band, it is not problematic because this band is not a Bluetooth usage band.

Since the wireless communication module 100C according to the still other embodiment shown in FIG. 5 has performance very similar to that shown in FIGs. 8A to 8C, detailed description thereof will be omitted.

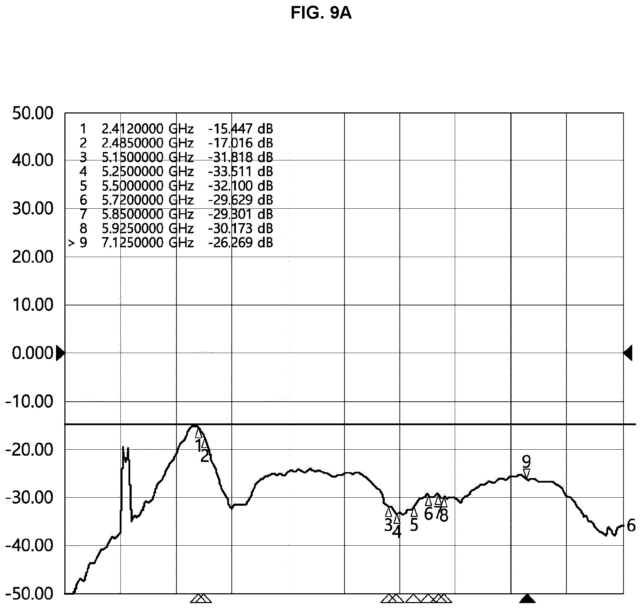

FIGs. 9A to 9C illustrate isolation between signals of the heterogeneous complex wireless communication module shown in FIG. 4.

Lower isolation (dB) means smaller signal interference. In a heterogeneous complex environment, a desirable value of the isolation may be -15 dB or less.

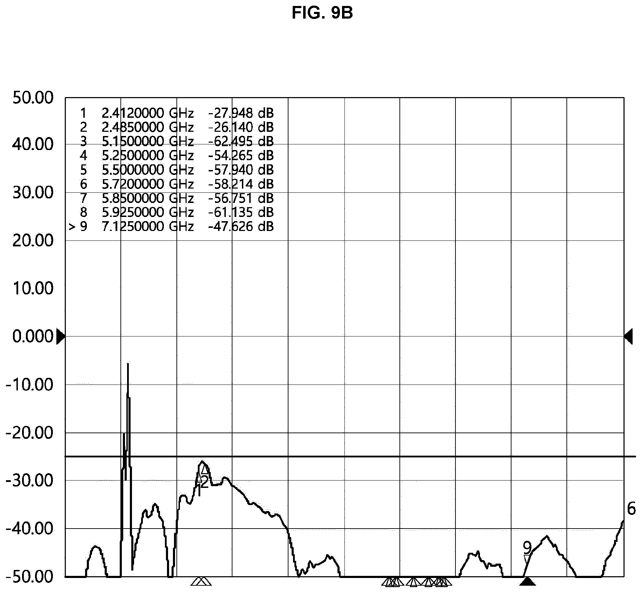

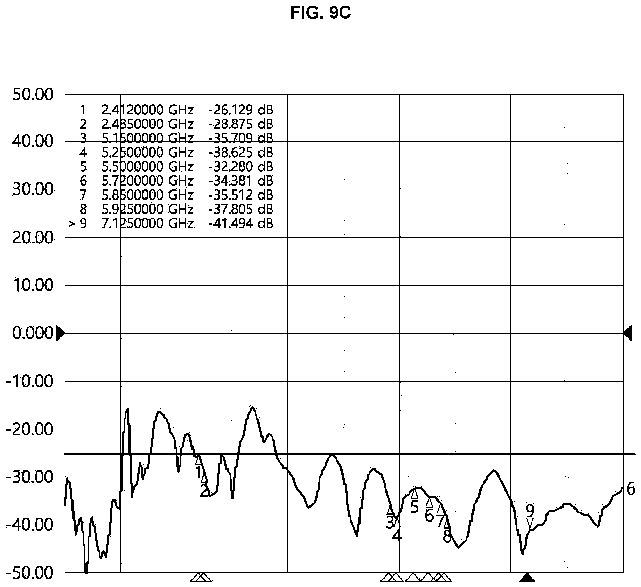

In each of the graphs in FIGs. 9A to 9C, the horizontal axis represents frequency, and the vertical axis represents isolation (dB). In addition, FIG. 9A illustrates isolation between the 1-1^{st} signal and the 1-2^{nd} signal, FIG. 9B illustrates isolation between the 1-1^{st} signal and the second signal, and FIG. 9C illustrates isolation between the 1-2^{nd} signal and the second signal.

First, referring to FIG. 9A, it can be seen that the 1-1^{st} signal and the 1-2^{nd} signal have isolation of -15 dB therebetween due to the influence of the second signal in the 2.4 GHz band, but high isolation of around -30 dB occurs in the remaining usage bands.

In addition, it can be seen from FIGs. 8B and 8C that high isolation of -25 dB or less occurs in the 2.4 GHz band, in which the frequencies overlap each other.

Since the wireless communication module 100C according to the still other embodiment shown in FIG. 5 has performance very similar to that shown in FIGs. 9A to 9C, detailed description thereof will be omitted.

Meanwhile, each of the wireless communication modules 100A, 100B, and 100C according to the embodiments has been described as including three antennas 111, 121, and 131. However, the embodiments of the present disclosure may also be applied to a wireless communication module including more than three antennas.

For example, if there are two antennas for transmitting and receiving Wi-Fi signals and there are two antennas for transmitting and receiving Bluetooth signals, the wireless communication module may be designed such that the antennas transmitting and receiving signals according to the same protocol have a phase difference of 180 degrees therebetween, and the antennas transmitting and receiving signals according to heterogeneous protocols have a phase difference of 90 degrees therebetween. For example, when the phase of the 1-1^{st} Wi-Fi signal from the 1-1^{st} antenna is 90 degrees, the phase of the 2-1^{st} Bluetooth signal from the 2-1^{st} antenna may be 180 degrees, the phase of the 1-2^{nd} Wi-Fi signal from the 1-2^{nd} antenna may be 270 degrees, and the phase of the 2-2^{nd} Bluetooth signal from the 2-2^{nd} antenna may be 0 degrees (360 degrees).

While the present disclosure has been particularly shown and described with reference to exemplary embodiments thereof, these embodiments are only proposed for illustrative purposes, and do not restrict the present disclosure, and it will be apparent to those skilled in the art that various changes in form and detail may be made without departing from the essential characteristics of the embodiments set forth herein. For example, respective configurations set forth in the embodiments may be modified and applied. Further, differences in such modifications and applications should be construed as falling within the scope of the present disclosure as defined by the appended claims.

### [Mode for Invention]

Various embodiments have been described in the best mode for carrying out the disclosure.

### [Industrial Applicability]

A heterogeneous complex wireless communication device according to embodiments may be used for display devices such as TVs.

## Claims

1. A wireless communication module, comprising:
a signal processing device;
a 1-1^{st} antenna connected to the signal processing device to transmit and receive a 1-1^{st} signal;
a 1-2^{nd} antenna connected to the signal processing device to transmit and receive a 1-2^{nd} signal;
a second antenna connected to the signal processing device to transmit and receive a second signal;
a first phase control element disposed between the 1-1^{st} antenna and the signal processing device;
a 1-2^{nd} phase control element disposed between the 1-2^{nd} antenna and the signal processing device; and
a second phase control element disposed between the second antenna and the signal processing device,
wherein the 1-1^{st} signal output from the 1-1^{st} phase control element and the 1-2^{nd} signal output from the 1-2^{nd} phase control element have a phase difference of 180 degrees, and
wherein the second signal output from the second phase control element has a phase difference of 90 degrees from each of the 1-1^{st} signal and the 1-2^{nd} signal.

2. The wireless communication module according to claim 1, wherein the 1-1^{st} signal and the 1-2^{nd} signal are signals according to a first protocol, and
wherein the second signal is a signal according to a second protocol different from the first protocol.

3. The wireless communication module according to claim 2, wherein the first protocol and the second protocol have operating frequencies at least partially overlapping each other, and
wherein the phase difference of 180 degrees and the phase difference of 90 degrees are phase differences at the operating frequencies overlapping each other.

4. The wireless communication module according to claim 2, wherein the first protocol includes a Wi-Fi protocol, and
wherein the second protocol includes a Bluetooth protocol.

5. A wireless communication module, comprising:
a signal processing device;
a 1-1^{st} antenna connected to the signal processing device to transmit and receive a 1-1^{st} signal;
a 1-2^{nd} antenna connected to the signal processing device to transmit and receive a 1-2^{nd} signal;
a second antenna connected to the signal processing device to transmit and receive a second signal;
a first phase control element disposed between the 1-1^{st} antenna and the signal processing device or between the 1-2^{nd} antenna and the signal processing device;
a second phase control element disposed between the second antenna and the signal processing device; and
a third phase control element disposed between a first ground connected to the 1-1^{st} antenna and to the 1-2^{nd} antenna and a second ground connected to the second antenna,
wherein the 1-1^{st} signal output from the 1-1^{st} antenna and the 1-2^{nd} signal output from the 1-2^{nd} antenna have a phase difference of 175 degrees to 185 degrees, and
wherein the second signal output from the second antenna has a phase difference of 85 degrees to 95 degrees from each of the 1-1^{st} signal and the 1-2^{nd} signal.

6. The wireless communication module according to claim 5, wherein the 1-1^{st} signal and the 1-2^{nd} signal are signals according to a first protocol, and
wherein the second signal is a signal according to a second protocol different from the first protocol.

7. The wireless communication module according to claim 6, wherein the first protocol and the second protocol have operating frequencies at least partially overlapping each other, and
wherein the phase differences are phase differences at the operating frequencies overlapping each other.

8. The wireless communication module according to claim 6, wherein the first protocol includes a Wi-Fi protocol, and
wherein the second protocol includes a Bluetooth protocol.

9. The wireless communication module according to claim 5, wherein the third phase control element generates a phase difference of 85 degrees to 95 degrees between both ends thereof.

10. The wireless communication module according to claim 6, wherein the 1-1^{st} antenna and the 1-2^{nd} antenna constitute a multi-input multi-output (MIMO) antenna according to the first protocol.
